(19) Europäisches Patentamt
European Patent Office
Office européen des brevets

(11) Veröffentlichungsnummer: **0 560 132 A1**

(12) **EUROPÄISCHE PATENTANMELDUNG**

(21) Anmeldenummer: **93102917.7**

(22) Anmeldetag: **25.02.93**

(51) Int. Cl.5: **C08L 77/00**, C08L 77/06, C08G 69/02, C08G 69/26, G03F 7/038

(30) Priorität: **05.03.92 DE 4206948**

(43) Veröffentlichungstag der Anmeldung: **15.09.93 Patentblatt 93/37**

(84) Benannte Vertragsstaaten: **BE CH DE FR GB LI NL**

(71) Anmelder: **BASF Aktiengesellschaft**
**Carl-Bosch-Strasse 38**
**D-67063 Ludwigshafen(DE)**

(72) Erfinder: **Goetz, Walter, Dr.**
**Dhauner Strasse 79**
**W-6700 Ludwigshafen(DE)**
Erfinder: **Gareiss, Brigitte, Dr.**
**Schillerstrasse 65**
**W-6700 Ludwigshafen(DE)**
Erfinder: **Deckers, Andreas, Dr.**
**Eschenbachstrasse 48**
**W-6700 Ludwigshafen(DE)**
Erfinder: **Baierweck, Petra, Dr.**
**Sebastian-Kneipp-Strasse 19**
**W-6707 Schifferstadt(DE)**

(54) **Formmassen auf der Basis olefinische Doppelbindungen enthaltender Homo- und Copolyamide.**

(57) Formmassen aus

A) 40 bis 100 Gew.-%, bezogen auf das Gesamtgewicht der Formmassen, einer Polyamidmischung auf der Basis von

$a_1$) 5 bis 30 Gew.-%, bezogen auf das Gesamtgewicht der Polyamidmischung, mindestens eines olefinische Doppelbindungen enthaltendes, Homo- oder Copolyamides aus

$\alpha$) 40 bis 100 Mol-%, bezogen auf die Homo- oder Copolyamide, mindestens eines Monomeren, welches mindestens eine olefinische Doppelbindung enthält (Monomere $\alpha$), aus der Gruppe der

$\alpha_1$) olefinisch ungesättigten Lactame,
$\alpha_2$) olefinisch ungesättigten Aminocarbonsäuren,
$\alpha_3$) olefinisch ungesättigten Dicarbonsäuren,
$\alpha_4$) olefinisch ungesättigten Diamine und

$\beta$) 0 bis 60 Mol-%, bezogen auf die Homo- oder Copolyamide, mindestens eines Monomeren, welches keine olefinische Doppelbindungen enthält (Monomere $\beta$), aus der Gruppe der

$\beta_1$) Lactame,
$\beta_2$) Aminocarbonsäuren,
$\beta_3$) Dicarbonsäuren,
$\beta_4$) Diamine und

$a_2$) 70 bis 95 Gew.-%, bezogen auf das Gesamtgewicht der Polyamidmischung, mindestens eines Polyamides, welches keine olefinischen Doppelbindungen enthält und

B) 0 bis 35 Gew.-%, bezogen auf das Gesamtgewicht der Formmassen, eines schlagzäh modifizierenden Kautschuks und

C) 0 bis 50 Gew.-%, bezogen auf das Gesamtgewicht der Formmassen, eines Füllstoffes und/oder Verstärkungsmittels und

D) 0 bis 20 Gew.-%, bezogen auf das Gesamtgewicht der Formmassen, eines Flammschutzmittels und gewünschtenfalls

E) weitere Zusatzstoffe und Hilfsmittel.

EP 0 560 132 A1

Die vorliegende Erfindung betrifft Formmassen aus

A) 40 bis 100 Gew.-%, bezogen auf das Gesamtgewicht der Formmassen, einer Polyamidmischung auf der Basis von

$a_1$) 5 bis 30 Gew.-%, bezogen auf das Gesamtgewicht der Polyamidmischung, mindestens eines olefinische Doppelbindungen enthaltendes, Homo- oder Copolyamides aus

$\alpha$) 40 bis 100 Mol-%, bezogen auf die Homo- oder Copolyamide, mindestens eines Monomeren, welches mindestens eine olefinische Doppelbindung enthält (Monomere $\alpha$), aus der Gruppe der

$\alpha_1$) olefinisch ungesättigten Lactame,

$\alpha_2$) olefinisch ungesättigten Aminocarbonsäuren,

$\alpha_3$) olefinisch ungesättigten Dicarbonsäuren,

$\alpha_4$) olefinisch ungesättigten Diamine und

$\beta$) 0 bis 60 Mol-%, bezogen auf die Homo- oder Copolyamide, mindestens eines Monomeren, welches keine olefinische Doppelbindungen enthält (Monomere $\beta$), aus der Gruppe der

$\beta_1$) Lactame,

$\beta_2$) Aminocarbonsäuren,

$\beta_3$) Dicarbonsäuren,

$\beta_4$) Diamine und

$a_2$) 70 bis 95 Gew.-%, bezogen auf das Gesamtgewicht der Polyamidmischung, mindestens eines Polyamides, welches keine olefinischen Doppelbindungen enthält und

B) 0 bis 35 Gew.-%, bezogen auf das Gesamtgewicht der Formmassen, eines schlagzäh modifizierenden Kautschuks und

C) 0 bis 50 Gew.-%, bezogen auf das Gesamtgewicht der Formmassen, eines Füllstoffes und/oder verstärkungsmittels und

D) 0 bis 20 Gew.-%, bezogen auf das Gesamtgewicht der Formmassen, eines Flammschutzmittels und gewünschtenfalls

E) weitere Zusatzstoffe und Hilfsmittel.

Weiterhin betrifft die Erfindung die Verwendung der Formmassen zur Herstellung von Formkörpern oder flächigen Gebilden sowie die Formkörper und flächigen Gebilde, die aus den Formmassen erhältlich sind. Ferner betrifft die Erfindung ein Verfahren zur Herstellung der Formkörper und flächigen Gebilde.

Polyamide, die olefinische Doppelbindungen in der Hauptkette aufweisen, sind beispielsweise aus P. Corradini et al.: Europ. Polym. J., 12 (7), 463 (1976), G. Maglio et al.: Polymer, 17 (3), 185 (1976) und F. Carriere: Bull. Soc. Chim. Fr. 10, 3965 (1972) bekannt und auf ihre physikalischen Eigenschaften hin untersucht worden.

Aus der DE-A1-39 06 684 ist bekannt, daß aromatische Polyamidharze, die olefinische Doppelbindungen in der Haupt- und/oder in Seitenketten enthalten durch energiereiche Strahlung vernetzt werden können. Aufgrund ihrer Eigenschaften sind sie jedoch für viele Anwendungzwecke nicht geeignet.

Aufgabe der vorliegenden Erfindung war es daher, Formmassen auf Polyamidbasis darzustellen, die sich zur Herstellung von Formkörpern oder flächigen Gebilden eignen, die problemlos vernetzt werden können und sich durch reproduzierbare Produkteigenschaften und insbesondere durch hohe Wärmeformbeständigkeit auszeichnen.

Die Aufgabe wurde durch die erfindungsgemäßen Formmassen auf der Basis einer Polyamidmischung aus olefinisch ungesättigten Polyamiden sowie Polyamiden, die keine olefinischen Doppelbindungen enthalten, gelöst.

Erfindungsgemäß bestehen diese Formmassen aus 40 bis 100 Gew.-%, bevorzugt 50 bis 90 Gew.-%, insbesondere 60 bis 80 Gew.-%, bezogen auf das Gesamtgewicht der Formmassen, einer Polyamidmischung (Komponente (A)) aus 5 bis 30, bevorzugt 5 bis 20 Gew.-%, insbesondere 5 bis 15 Gew.-%, bezogen auf das Gesamtgewicht der Komponente (A), mindestens eines, olefinische Doppelbindungen enthaltenden, Homo- oder Copolyamides ($a_1$) und 70 bis 95, bevorzugt 80 bis 95 Gew.-%, insbesondere 85 bis 95 Gew.-%, bezogen auf das Gesamtgewicht der Komponente (A), mindestens eines Polyamides ($a_2$), welches keine olefinischen Doppelbindungen enthält und 0 bis 35 Gew.-%, bevorzugt 5 bis 25 Gew.-%, insbesondere 10 bis 20 Gew.-%, bezogen auf das Gesamtgewicht der Formmassen, eines schlagzäh modifizierenden Kautschuks (Komponente (B)) und 0 bis 50 Gew.-%, bevorzugt 10 bis 40 Gew.-%, insbesondere 15 bis 35 Gew.-%, bezogen auf das Gesamtgewicht der Formmassen, eines Füllstoffes und/oder Verstärkungsmittels (Komponente (C)) und 0 bis 20 Gew.-%, bevorzugt 5 bis 20 Gew.-%, insbesondere 5 bis 15 Gew.-%, bezogen auf das Gesamtgewicht der Formmassen, eines Flammschutzmittels (Komponente (D)). Gewünschtenfalls können diese Formmassen weitere Zusatzstoffe und Hilfsmittel (Komponente (E)) enthalten.

Erfindungsgemäß enthalten die olefinisch ungesättigten Polyamide ($a_1$) 40 bis 100 Mol-%, bevorzugt 40 bis 60 Mol-%, insbesondere 45 bis 55 Mol-%, bezogen auf die Komponente ($a_1$), an Monomeren ($\alpha$), die mindestens eine olefinische Doppelbindung haben und der Gruppe der jeweils olefinisch ungesättigten Lactame, Aminocarbonsäuren, Dicarbonsäuren und Diamine angehören. Im allgemeinen haben diese ungesättigten Monomere ($\alpha$) nicht mehr als fünf, insbesondere nicht mehr als drei olefinische Doppelbindungen, die, wie es von Vorteil ist, nicht in Konjugation zueinander stehen. Neben olefinischen Doppelbindungen können die Monomere ($\alpha$) auch aromatische Doppelbindungen aufweisen, wobei die olefinischen und aromatischen Doppelbindungen vorteilhafterweise nicht konjugiert zueinander stehen. Verbindungen, die eine Doppelbindung in $\alpha$-Stellung zur Carbonylfunktion enthalten, sind dabei als Monomere ($\alpha$) weniger geeignet. Aliphatische Verbindungen mit 6 oder mehr Kohlenstoffatomen, die eine Doppelbindung in $\alpha$-Stellung zur Carbonylfunktion enthalten, können jedoch als Monomere ($\alpha$) geeignet sein.

Zu den olefinisch ungesättigten Lactamen ($\alpha_1$), die im allgemeinen 6 bis 12, insbesondere 6 bis 7 Kohlenstoffatome aufweisen, zählen 3-Hexensäurelactam, 4-Hexensäurelactam, 5-Hexensäurelactam, 3-Heptensäurelactam, 4-Heptensäurelactam, 5-Heptensäurelactam, 6-Heptensäurelactam, 5-Methyl-4-pentensäurelactam. Selbstverständlich können auch Mischungen verschiedener ungesättigter Lactame eingesetzt werden.

Die in Betracht kommenden olefinisch ungesättigten Aminocarbonsäuren ($\alpha_2$) haben im allgemeinen 6 bis 20 Kohlenstoffatome. Beispiele für diese Verbindungen sind: 6-Aminohexensäuren, 16-Amino-9-hexadecen-1-säure, 18-Amino-9,12-octadecadien-1-säure, 20-Amino-9-eicosen-1-säure. Daneben kommen auch Mischungen unterschiedlicher ungesättigter Aminocarbonsäuren in Betracht.

Erfindungsgemäß können auch olefinisch ungesättigte Dicarbonsäuren ($\alpha_3$) eingesetzt werden. Dabei können diese linear oder verzweigt sein und sowohl cycloaliphatische als auch aromatische Ringe enthalten. Bevorzugt werden lineare aliphatische Dicarbonsäuren verwendet. In der Regel haben diese 6 bis 30 Kohlenstoffatome. Bevorzugt werden Dicarbonsäuren mit 8 bis 30 Kohlenstoffatomen verwendet. Langkettige Dicarbonsäuren mit 12 bis 30 Kohlenstoffatomen werden besonders bevorzugt. Als olefinisch ungesättigte Dicarbonsäuren sind beispielsweise zu nennen 2-Hexen-1,6-dicarbonsäure, 3-Hexen-1,6-dicarbonsäure, Octen-1,8-dicarbonsäuren wie 4-Octen-1,8-dicarbonsäure. Langkettige Dicarbonsäuren, die beispielsweise mittels Metathesereaktionen aus Fettsäureestern erhältlich sind, können ebenfalls verwendet werden. Darunter sind 9-Octadecen-1,18-dicarbonsäure (aus ölsäure herstellbar) und 10 Eicosen-1,20-dicarbonsäure (aus Ricinolsäure herstellbar). Daneben kommen auch die aus öl-, Linol-, Linolensäure-Gemischen herstellbaren 9,12-Tetracosadien-1,24-dicarbonsäure, 9,12-Heneicosadien-1,21-dicarbonsäure, 9,12,15-Tetracosatrien-1,24-dicarbonsäure, 9,12,15,18-Heptacosatetraen-1,24-dicarbonsäure sowie die aus öl-, Ricinolsäure-Gemischen zugänglichen 9-Nonadecen-1,19-dicarbonsäure, 9,12-Docasadien-1,22-dicarbonsäure und 9,12,15-pentacosatrien-1,25-dicarbonsäure in Betracht. Eine bevorzugte ungesättigte Dicarbonsäure ist 9-Octadecen-1,18-dicarbonsäure. Ganz besonders werden 3-Hexen-1,6-dicarbonsäure, 4-Octen-1,8-dicarbonsäure und 10-Eicosen-1,20-dicarbonsäure bevorzugt. Es können sowohl Einzelverbindungen als auch Gemische unterschiedlicher ungesättigter Dicarbonsäuren verwendet werden.

Als Monomere ($\alpha$) eignen sich erfindungsgemäß auch olefinisch ungesättigte Diamine ($\alpha_4$). Diese Diamine können sowohl linear als auch verzweigt sein und sowohl cycloaliphatische als auch aromatische Ringe enthalten. Diese haben im allgemeinen 4 bis 20, bevorzugt 6 bis 18, insbesondere 6 bis 12 Kohlenstoffatome und gehören z.B. zu der Gruppe 1,4-Diamino-2-buten, 1,5-Diamino-2-penten, 1,6-Diamino-2-hexen, 1,6-Diamino-3-hexen, 2,7-Diamino-2,7-dimethyl-4-octen, 1,9-Diamino-2,7-nonadien, 1,10-Diamino-2,8-decadien. Bevorzugte ungesättigte Diamine sind 1,6-Diamino-2-hexen, 1,6-Diamino-3-hexen sowie 2,7-Diamino-2,7-dimethyl-4-octen. Ferner können Mischungen unterschiedlicher ungesättigter Diamine verwendet werden.

Die Komponente ($a_1$) kann neben dem olefinisch ungesättigten Monomeren ($\alpha$) bis zu 60 Mol-%, bevorzugt von 40 bis 60, insbesondere von 45 bis 55 Mol-%, bezogen auf die Komponente ($a_1$), an Comonomeren (ß), die keine olefinischen Doppelbindungen aufweisen, enthalten. Diese Monomeren ($\beta$) können jedoch aromatische Doppelbindungen haben. Neben aromatischen Ringen können die Monomeren ($\beta$) auch cycloaliphatische Ringe enthalten. Als Monomere ($\beta$) kommen Verbindungen aus der Gruppe der Lactame, Aminocarbonsäuren, Dicarbonsäuren und Diamine oder Mischungen derselben in Betracht.

Die Lactame ($\beta_1$) haben im allgemeinen 5 bis 12 Kohlenstoffatome, insbesondere 7 bis 12 Kohlenstoffatome. Vertreter dieser Monomeren sind $\delta$-Valerolactam, $\epsilon$-Caprolactam, önantholactam, Capryllactam und Laurinlactam. Neben den Einzelverbindungen eignen sich auch Gemische zweier oder mehr verschiedener Lactame.

$\omega$-Aminocarbonsäuren ($\beta_2$), mit im allgemeinen 4 bis 20, bevorzugt 5 bis 12 Kohlenstoffatomen, wie 5-Aminopentansäure, 6-Aminohexansäure, 7-Aminoheptansäure, 8-Aminooctansäure, 11-Aminoundecansäure sowie Mischungen unterschiedlicher Aminocarbonsäuren sind als Monomere ($\beta$) geeignet.

Zu den Dicarbonsäuren ($\beta_3$) zählen sowohl aromatische als auch aliphatische. Aromatische Dicarbonsäuren haben vorzugsweise 8 bis 16 Kohlenstoffatome. Geeignete aromatische Dicarbonsäuren sind beispielsweise Isophthalsäure, Terephthalsäure, substituierte Terephthal- und Isophthalsäuren wie 3-t-Butylisophthalsäure oder Phenoxyterephthalsäure, mehrkernige Dicarbonsäuren, z.B. 4,4'-Diphenyldicarbonsäure, 3,3'-Diphenyldicarbonsäure, 3,3'-Diphenylmethandicarbonsäure, 4,4'-Diphenylmethandicarbonsäure, 3,3'-Diphenylsulfondicarbonsäure, 4,4'-Diphenylsulfondicarbonsäure, 1,4-Naphthalindicarbonsäure,2,6-Naphthalindicarbonsäure, wobei Terephthalsäure und Isoterephthalsäure besonders bevorzugt sind. Vertreter der aliphatischen Dicarbonsäuren, die in der Regel 4 bis 20 Kohlenstoffatome, vorteilhafterweise 4 bis 16 Kohlenstoffatome, aufweisen, sind Adipinsäure, Suberinsäure, Azelainsäure, Sebacinsäure und 1,12-Dodecansäure. Besonders bevorzugt ist Adipinsäure. Es können aber auch Mischungen unterschiedlicher Dicarbonsäuren verwendet werden.

Geeignete Diamine ($\beta_4$) haben in der Regel 4 bis 20, bevorzugt 6 bis 12 Kohlenstoffatome. 1,4-Diaminobutan, 1,5-Diaminopentan, 1,6-Diaminohexan, Piperazin, 4,4'-Diaminodicyclohexylmethan, 2,2-(4,4'-Diaminodicyclohexyl)propan und 3,3'-Dimethyl-4,4'-diaminodicyclohexylmethan sind Beispiele für Diamine, die als Monomere ($\beta$) verwendet werden können. Außer den aliphatischen und cycloaliphatischen Diaminen kommen auch aromatische Ringe enthaltende Diamine wie m-Xylylendiamin in Betracht. Daneben eignen sich auch Mischungen aus zwei oder mehr unterschiedlichen Diaminen.

Im Fall der olefinisch ungesättigten Lactame ($\alpha_1$) bzw. der olefinisch ungesättigten Aminocarbonsäuren ($\alpha_2$) können die erfindungsgemäßen Polyamide aus einer der Monomertypen aufgebaut sein. Sie können aber auch aus Mischungen unterschiedlicher Monomertypen hergestellt werden. So kommen Mischungen aus ($\alpha_1$) mit ($\alpha_2$) ebenso in Betracht wie Mischungen aus ungesättigten Dicarbonsäuren ($\alpha_3$) mit entsprechenden Mengen an ungesättigten Diaminen ($\alpha_4$). Dabei versteht es sich, daß die Amin- und Säureäquivalente etwa im Verhältnis 1:1 eingesetzt werden sollten. Außerdem sind Kombinationen aus ungesättigten Lactamen ($\alpha_1$) bzw. ungesättigten Aminocarbonsäuren ($\alpha_2$) mit Mischungen aus ($\alpha_3$) und ($\alpha_4$) möglich. Beispiele für in Betracht kommende Mischungen sind ferner

- olefinisch ungesättigte Lactame ($\alpha_1$) mit Lactamen ($\beta_1$),
- olefinisch ungesättigte Aminocarbonsäuren ($\alpha_2$) mit Amincarbonsäuren ($\beta_2$),
- olefinisch ungesättigte Lactame ($\alpha_1$), mit Mischungen aus Dicarbonsäuren ($\beta_3$) und Diaminen ($\beta_4$),
- olefinisch ungesättigte Diaminen ($\beta_4$) mit Dicarbonsäuren ($\beta_3$).

Besonders bevorzugte Mischungen sind:

- olefinisch ungesättigte Dicarbonsäuren ($\alpha_3$) mit Dicarbonsäuren ($\beta_3$) und mit Diaminen ($\beta_4$),
- olefinisch ungesättigte Dicarbonsäuren ($\alpha_3$) mit Lactamen ($\beta_1$) und mit Diaminen ($\beta_4$).

Ganz besonders bevorzugt sind die beiden letztgenannten Mischungen, wenn als ($\beta_1$) $\epsilon$-Caprolactam, als ($\beta_3$) Adipinsäure und als ($\beta_4$) 1,6-Diaminohexan verwendet wird.

Bevorzugte olefinisch ungesättigte Dicarbonsäuren ($\alpha_3$) sind in diesen Mischungen 3-Hexendicarbonsäure, 4-Octendicarbonsäure oder 10-Eicosendicarbonsäure. Bevorzugte Mischungen enthalten ferner olefinisch ungesättigte Diamine ($\alpha_4$), insbesondere 1,6-Diamino-3-hexen oder 2, 7-Diamino-2,7-dimethyl-4-octen oder deren Mischungen.

Zur Herstellung der Homo- und Copolyamide eignen sich sowohl diskontinuierliche als auch kontinuierliche Verfahren. Zur Herstellung von Homo- oder Copolyamiden, die neben olefinischen Doppelbindungen auch aromatische Einheiten aufweisen und deren Einheiten ganz oder teilweise aus Dicarbonsäuren erhältlich sind, haben sich Verfahren, als besonders vorteilhaft erwiesen, bei denen unter erhöhtem Druck und Temperaturen zwischen ca. 200 und 400 °C innerhalb kurzer Verweilzeiten zunächst Präpolymere hergestellt werden, die anschließend in fester Phase oder in der Schmelze auf Endviskosität nachkondensiert werden. Durch die kurzen Verweilzeiten können Nebenreaktionen wie Selbstkondensation von Diaminen zu Triaminen zurückgedrängt werden.

Die als Komponente ($a_2$) in den Massen enthaltenen Polyamide sind an sich bekannt und umfassen die amorphen, bevorzugt aber teilkristallinen Harze mit Molekulargewichten (Gewichtsmittelwerten) von mindestens 5000, die gewöhnlich als Nylon bezeichnet werden.

Die Polyamide ($a_2$) können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von $\omega$-Aminocarbonsäuren oder Polyaddition von Lactamen hergestellt werden.

Beispiele für Polyamide ($a_2$) sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und Polyamide aus Di(p-aminocyclohexyl)-methan-, Dodecandisäure und m-Xylylendiamin.

Es ist auch möglich, Polyamide ($a_2$) zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin.

Derartige teilaromatische Copolyamide sind aufgebaut aus

$X_1$) 20 bis 90 Gew.-% Einheiten, die sich von Terephthalsäure und Hexanmethylendiamin ableiten und

$X_2$) 0 bis 50, insbesondere 25 bis 40 Gew.-% Einheiten, die sich von $\epsilon$-Caprolactam ableiten und

$X_3$) 0 bis 80, insbesondere 35 bis 60 Gew.-% Einheiten, die sich von Adipinsäure und Hexamethylendiamin ableiten und

$X_4$) 0 bis 40, insbesondere 20 bis 30 Gew.-% weiteren polyamidbildenden Monomeren,

wobei der Anteil der Komponente ($X_2$) oder ($X_3$) oder ($X_4$) oder deren Mischungen mindestens 10 Gew.-% beträgt.

Als besonders vorteilhaft für viele Anwendungszwecke haben sich Polyamide ($a_2$) mit 50 bis 80, insbesondere 60 bis 75 Gew.-% Einheiten, die sich von Terephthalsäure und Hexamethylendiamin ($X_1$) und 20 bis 50, vorzugsweise 25 bis 40 Gew.-% Einheiten, die sich von $\epsilon$-Caprolactam ableiten (Einheiten $X_2$) enthalten, erwiesen.

Polyamidbildende Monomere ($X_4$) sind beispielsweise aromatische Dicarbonsäuren, die 8 bis 16 Kohlenstoffatome aufweisen.

Geeignete aromatische Dicarbonsäuren sind beispielsweise Terephthalsäure, Isophthalsäure, substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4' - und 3,3'-Diphenylsulfondicarbonsäure, 1,4- oder 2,6-Naphthalindicarbonsäure, Phenoxyterephthalsäure, wobei Terephthalsäure und Isophtalsäure besonders bevorzugt sind.

Weitere polyamidbildende Monomere ($X_4$) können sich von aliphatischen Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, önanthlactam, $\omega$-Aminoundecansäure und Laurinlactam als Vertreter von Lactamen bzw. Aminocarbonsäuren genannt.

Enthält die Komponente ($X_4$) aromatische Dicarbonsäuren, bei denen die Carboxylgruppen in para-Stellung stehen, empfiehlt es sich, diese mit ($X_1$) und ($X_2$) oder ($X_1$) und ($X_3$) als ternäre Copolyamide aufzubauen, da andernfalls das Copolyamid einen zu hohen Schmelzpunkt aufweist und nur unter Zersetzung schmilzt.

Zur Herstellung der Polyamide der Komponente ($a_2$) eignen sich sowohl diskontinuierliche als auch kontinuierliche Verfahren, insbesondere jedoch die bereits oben für die Herstellung der olefinischen Doppelbindungen enthaltenden Homo- und Copolyamide ($a_1$) erwähnten Verfahren.

Neben der Mischung aus olefinisch ungesättigten und olefinisch gesättigten Polyamiden (Komponente (A)) enthalten die Formmassen 0 bis 35 Gew.-%, bevorzugt von 5 bis 25, insbesondere von 10 bis 20 Gew.-%, bezogen auf das Gesamtgewicht der Formmassen eines schlagzäh modifizierenden Kautschuks. Im allgemeinen handelt es sich bei dieser Kautschukkomponente (B) um Copolymerisate, die bevorzugt aus mindestens zwei der folgenden Monomeren als Hauptkomponenten aufgebaut sind: Ethylen, Propylen, Isobuten, Isopren, Chloropren, Vinylacetat, Styrol, Acrylnitril und Acryl- und Methacrylsäureestern mit 1 bis 18 C-Atomen in der Alkoholkomponente.

Kautschuke dieser Art sind z.B. im Houben-Weyl, Methoden der organischen Chemie, Bd. 14/1 (Thieme-Verlag, Stuttgart, 1961), Seiten 392 bis 406 und in der Monographie von C.B. Bucknall, "Toughened Plastic" (Applied Science Publishers, London, 1977) beschrieben.

Bevorzugte Arten von solchen Elastomeren sind die sog. Ethylen-Propylen (EPM) bzw. Ethylen-Propylen-Dien-(EPDM)-Kautschuke, die vorzugsweise ein Verhältnis von Ethyleneinheiten zu Propyleneinheiten im Bereich von 40:60 bis 90:10 aufweisen.

Die Mooney-Viskositäten (MLI + 4/100 ° C) solcher unvernetzten EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 ° C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren, nicht-konjugierte Diene mit 5 bis 25 C-Atomen wie Penta-1,4-dien, Hexa-1,4-dien, hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln II oder III oder IV oder V zum Monomerengemisch in den Kautschuk eingebaut

$R_1C(COOR_2)=C(COOR_3)R_4$ II

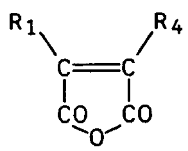

III

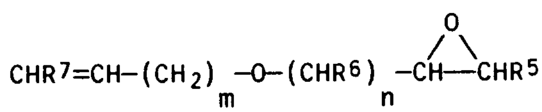

IV

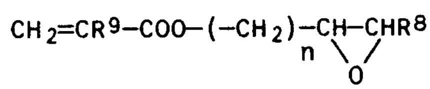

V

wobei $R^1$ bis $R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Vorzugsweise bedeuten die Reste $R^1$ bis $R^7$ Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln II, III und V sind Maleinsäure, Maleinsäureanhydrid und Epoxygruppen-enthaltende Ester der Acrylsäure und/oder Methacrylsäure, wobei Glycidylacrylat, Glycidylmethacrylat und die Ester mit tertiären Alkoholen, wie t-Butylacrylat besonders bevorzugt werden. Letztere weisen zwar keine freien Carboxylgruppen auf, kommen in ihrem Verhalten aber den freien Säuren nahe und werden deshalb als Monomere mit latenten Carboxylgruppen bezeichnet.

Der Ethylengehalt der Copolymeren liegt im allgemeinen im Bereich von 50 bis 98 Gew.-%, und der Anteil an Methacrylsäureestern zwischen 2 und 50 Gew.-%. Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an Methacrylsäureestern.

Besonders bevorzugt sind Copolymerisate aus

50 bis 98, insbesondere 60 bis 95 Gew.-% Ethylen,

0,1 bis 40, insbesondere 0,3 bis 20 Gew.-% Glycidylacrylat und/oder Glycidylmethacrylat, Acrylsäure und/oder Maleinsäureanhydrid, und

1 bis 45, insbesondere 10 bis 35 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Der Schmelzindex der Ethylencopolymeren liegt im allgemeinen im Bereich von 1 bis 80 g/10 min (gemessen bei 190 °C und 2,16 kg Belastung).

Bevorzugte Elastomere (B) sind Emulsionspolymerisate, deren Herstellung z.B. in Houben-Weyl, Methoden der organischen Chemie, Band XII. I (1961) sowie bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel VI

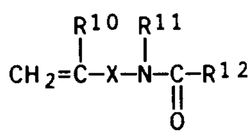

VI

eingeführt werden können,

wobei die Substituenten folgende Bedeutung haben können:

- $R^{10}$ Wasserstoff oder eine $C_1$- bis $C_4$-Alkylgruppe,
- $R^{11}$ Wasserstoff, eine $C_1$- bis $C_8$-Alkylgruppe oder eine Arylgruppe, insbesondere Phenyl,
- $R^{12}$ Wasserstoff, eine $C_1$- bis $C_{10}$-Alkylgruppe, eine $C_6$-$C_{12}$-Arylgruppe oder $-OR^{13}$,
- $R^{13}$ eine $C_1$- bis $C_8$-Alkyl- oder $C_6$-$C_{12}$-Arylgruppe, die gegebenenfalls mit O- oder N-haltigen Gruppen substituiert sein können,
- X eine chemische Bindung, eine $C_1$- bis $C_{10}$-Alkylen- oder $C_6$- bis $C_{12}$-Arylengruppe oder

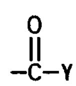

- Y O-Z- oder NH-Z und
- Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Divinylbenzol, Diallylphthalat und Dihydrodicyclopentodienylacrylat sowie die in der EP-A 50 265 beschriebenen Verbindungen zu nennen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (B) bis zu 5 Gew.-%, vorzugsweise nicht mehr als 3 Gew.-%, bezogen auf (B).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| $M_1$ | Isopren, n-Butylacrylat, Ethylhexylacrylat oder deren Mischungen | Styrol, Acrylnitril, Methylmethacrylat |
| $M_2$ | wie $M_1$ aber unter Mitverwendung von Vernetzern | wie $M_1$ |
| $M_3$ | wie $M_1$ oder $M_2$ | n-Butylacrylat, Ethylacrylat, Methylacrylat, Isopren, Ethylhexylacrylat |
| $M_4$ | wie $M_1$ oder $M_2$ | wie $M_1$ oder $M_3$ aber unter Mitverwendung von Monomeren mit reaktiven Gruppen wie hierin beschrieben |
| $M_5$ | Styrol, Acrylnitril, Methylmethacrylat oder deren Mischungen | erste Hülle aus Monomeren wie unter $M_1$ und $M_2$ für den Kern beschrieben<br>zweite Hülle wie unter $M_1$ oder $M_3$ für die Hülle beschrieben |

Anstelle von Pfropfpolymerisaten mit einem mehrschaligen Aufbau können auch homogene, d.h. einschalige Elastomere aus Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)-acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat und einer äußeren Hülle aus den vorstehend genannten Copolymeren und Copolymere von Ethylen mit Comonomeren, die reaktive Gruppen liefern.

Die beschriebenen Elastomere (B) können auch nach anderen üblichen Verfahren, z.B. durch Suspensionspolymerisation, hergestellt werden.

Selbstverständlich können auch Mischungen der vorstehend aufgeführten Kautschuktypen eingesetzt werden.

Die erfindungsgemäßen Formmassen können bis zu 50 Gew.-%, vorzugsweise 10 bis 40 Gew.-%, insbesondere 15 bis 35 Gew.-%, bezogen auf das Gesamtgewicht der Formmassen an faser- oder teilchenförmigen Füllstoffen oder Verstärkungsmitteln oder Mischungen solcher Materialien enthalten (Komponente (C)).

Als faserförmige Füllstoffe seien hier nur beispielsweise Glasfasern, Kohlenstoff-Fasern, Aramid-Fasern, Kaliumtitanatfasern und faserförmige Silikate wie Wollastonit genannt. Besonders bevorzugt werden Glasfasern verwendet.

Bei der Verwendung von Kohlenstoff- oder Glasfasern können diese zur besseren Verträglichkeit mit der Polyamidmischung (A) mit einer Schlichte und einem Haftvermittler ausgerüstet sein.

Im allgemeinen haben die verwendeten Glasfasern einen Durchmesser im Bereich von 6 bis 20 µm. Da sich beim Verarbeiten die mittlere Faserlänge der Glasfasern verkürzt, kann die Einarbeitung der Glasfasern sowohl in Form von Endlossträngen (Rovings) als auch Schnittglasfasern mit einer Länge von ca. 1 bis 10 mm oder in Form von Kurzglasfasern mit einer Länge von etwa 0,05 bis 1,5 mm erfolgen. Nach der Verarbeitung ist eine mittlere Faserlänge von 0,05 bis 5 mm optimal.

Als teilchenförmige Füllstoffe seien hier nur stellvertretend Glaskugeln, Quarzmehl, Bornitrid, Kaolin, Calciumcarbonat, Glimmer, Magnesiumcarbonat (Kreide) und Titandioxid genannt, wovon Titandioxid und Kaolin im allgemeinen bevorzugt werden.

Die erfindungsgemäßen Formmassen können weiterhin Flammschutzmittel in Mengen von 0 bis 20, vorzugsweise 5 bis 20 Gew.-%, insbesondere 5 bis 15 Gew.-%, bezogen auf das Gesamtgewicht der Formmassen enthalten (Komponente (D)).

Es kommen alle bekannten Flammschutzmittel in Betracht, wie Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A der Tetrabromphthalsäure, des 2,6-Dibromphenols und 2,4,6-Tribromphenols und deren Derivate.

Weitere halogenhaltige Flammschutzmittel (D) sind Tetrabrombenzol, Hexachlorbenzol und Hexabrombenzol sowie halogenierte Polystyrole und Polyphenylenether. Auch die in der DE-A-19 46 926 beschriebenen halogenierten Phthalimide können verwendet werden. Von diesen hat insbesondere N,N'-Ethylenbistetrabromphthalimid Bedeutung erlangt.

Bevorzugtes Flammschutzmittel (D) ist elementarer roter Phosphor, insbesondere dann, wenn die Formmassen glasfaserverstärkt sind.

Es ist zwar möglich, den roten Phosphor unbehandelt einzusetzen, besonders eignen sich jedoch Flammschutzmittel, in denen der Phosphor oberflächlich mit niedermolekularen flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polymethanen beschichtet sind.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere. Bevorzugt werden Konzentrate mit einem möglichst hohen Phosphoranteil verwendet. Im allgemeinen beträgt der Phosphoranteil im Konzentrat nicht weniger als 30 Gew.-%, bezogen auf das Gewicht des Konzentrats.

Die mittlere Teilchengröße ($d_{50}$) der in den Formmassen verteilten Phosphorpartikel liegt bevorzugt im Bereich von 0,001 bis 0,5mm, insbesondere von 0,001 bis 0,2mm.

Geeignete Phosphorverbindungen als Flammschutzmittel sind Organophosphorverbindungen wie Phosphonate, Phosphinate, Phosphonate, Phosphinite, Phosphinoxide, Phosphine, Phosphite oder Phosphate sind ebenfalls bevorzugt. Als Beispiel sei Triphenylphosphinoxid genannt. Dieses kann allein oder vermischt mit Hexabrombenzol oder einem chlorierten Biphenyl oder rotem Phosphor und, wahlweise, Antimonoxid verwendet werden.

Typisch für die bevorzugten Phosphorverbindungen, die gemäß in der vorliegenden Erfindung verwendet werden können, sind solche der folgenden allgemeinen Formel

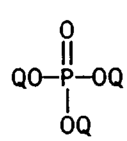

worin Q für Wasserstoff oder für gleiche oder verschiedene Kohlenwasserstoffreste oder Halogenkohlenwasserstoffreste, wie Alkyl, Cycloalkyl, Aryl, alkylsubstituiertes Aryl und arylsubstituiertes Alkyl steht, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi(p-tolyl)phosphat, Diphenylhydrogenphosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination

von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis-(hydroxymethyl)phosphoniumchlorid. Diese entflammungshemmenden Additive sind größtenteils im Handel erhältlich.

Neben den wesentlichen Komponenten können die erfindungsgemäßen Formmassen Zusatzstoffe und Verarbeitungshilfsmittel (Komponente (E)) enthalten. Deren Anteil beträgt im allgemeinen bis zu 10 Gew.-%, vorzugsweise bis zu 5 Gew.-%, insbesondere 0,5 bis 2 Gew.-%, bezogen auf das Gesamtgewicht der Formmassen.

Zusatzstoffe, die üblicherweise verwendet werden sind z.B. Oxidationsverzögerer, Wärmestabilisatoren, Mittel gegen die Zersetzung durch Licht, Färbemittel, Farbstoffe, Pigmente, Weichmacher, Gleit- und Entformungsmittel.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Daneben kommen, insbesondere für Polyamidmischungen (A), die aromatische Einheiten aufweisen, Stabilisatoren auf der Basis von aromatischen, sekundären Aminen wie Diphenylamin und dessen Derivate in Betracht.

Beispiele für UV-Stabilisatoren sind verschiedene substituierte Resorcine, Salicylate, Benzotriazole, Benzophenone, und auch sterisch gehinderte Amine, sogenannte HALS (s. z.B. Gächter/Müller, Plastics Additives 3rd Ed. Hanser Publishers, Munich, Seite 208 f), die im allgemeinen in Mengen bis zu 2 Gew.-% eingesetzt werden.

Gleit- und Entformungsmittel, die in der Regel in Mengen bis zu 1 Gew.-% der Formmasse zugesetzt werden, sind beispielsweise langkettige Fettsäuren, wie Palmitinsäure oder Stearinsäure und ihre Salze bzw. Alkylester und -amide, Stearylalkohol sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors und Aluminiums genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern vorzugsweise Zweischneckenextruder, Brabender-Mühlen oder Banburry-Mühlen sowie Knetern mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 380 °C erforderlich. Die Abmischreihenfolge der Komponenten kann variiert werden, so können zwei oder, falls gewünscht, drei Komponenten vorgemischt werden, es können aber auch alle Komponenten gemeinsam gemischt werden.

Aus den so erhaltenen Formmassen lassen sich Formkörper oder flächige Gebilde wie Fasern oder Folien herstellen, wozu z.B. bekannte Verfahren wie Spritzguß, angewandt werden können. Anschließend können die Formkörper oder flächigen Gebilde energiereicher Strahlung ausgesetzt werden, wodurch die ihnen zugrunde liegenden Formmassen vernetzt werden. Im allgemeinen enthalten die vernetzten Produkte weniger als 50 %, insbesondere weniger als 30 % der ursprünglichen olefinischen Doppelbindungen. Unter energiereicher Strahlung ist beispielsweise Beta-, Gamma- und Elektronenstrahlung sowie Röntgenstrahlung zu verstehen. Hierbei wird die Strahlung nach der gewünschten Eindringtiefe in das Material ausgewählt. UV-Strahlung ist aufgrund ihrer geringen Eindringtiefe in die teilkristallinen und daher nicht transparenten Formkörper weniger geeignet. Bevorzugt werden Elektronenstrahlen von 20 bis 200, insbesondere 50 bis 100 k-Gray verwendet. Die Elektronenstrahlen können beispielsweise mittels van der Graaf-Generatoren mit Strahlungsenergien von 300 bis 3000, bevorzugt 800 bis 2000 keV erzeugt werden, wobei die Energie umso höher gewählt wird, je größer die erforderliche Eindringtiefe in das Formteil ist.

Die Gesamtbestrahlungszeit liegt im allgemeinen im Bereich von 1 bis 60, bevorzugt von 5 bis 30 s. Die Formkörper oder flächigen Gebilde können dabei ununterbrochen bestrahlt oder mehrmals für kürzere Zeit bestrahlt werden bis die gewünschte Gesamtbestrahlungszeit erreicht ist. Mit Elektronenstrahlen können üblicherweise Teile bis zu einer Dicke von etwa 20 cm, bevorzugt 10 cm ausgehärtet werden. Dies entspricht bei beidseitiger Bestrahlung einer Eindringtiefe von ca. 10 bzw. ca. 5 cm.

Es ist auch möglich, die Formkörper oder flächigen Gebilde, Gammastrahlung auszusetzen, die von radioaktiven Nukliden erzeugt werden. Mit Gammastrahlen werden Eindringtiefen von mehreren Metern erreicht, so daß die Dicke der zu vernetzenden Teile praktisch keiner Einschränkung unterliegt. Die Bestrahlungszeiten bei Gammastrahlung liegen im allgemeinen im Bereich von 0,1 bis 100 Stunden, bevorzugt von ca. 1 bis ca. 20 Stunden.

Die vernetzten Produkte zeichnen sich insbesondere durch sehr gute Wärmeformbeständigkeiten aus. Formkörper, Fasern oder Folien, die nach dem erfindungsgemäßen Verfahren hergestellt wurden, eignen sich daher insbesondere für Einsatzbereiche in denen sie hohen thermischen Belastungen genügen sollen, so z.B. auf dem Elektro- und Elektronikgebiet.

Beispiele

Abkürzungen

| | |
|---|---|
| HDS | 3-Hexen-1,6-dicarbonsäure |
| HMD | Hexamethylendiamin |
| DSC | Differenzialthermoanalyse |
| VZ | Viskositätszahl |
| GF | Glasfaser |
| PA 6 | Polyamid-6 |
| PA 66 | Polyamid-6.6 |

Herstellung eines olefinisch ungesättigten Polyamids ($a_1$)

288 g (2 Mol) 3-Hexen-1,6-dicarbonsäure (HDS) und 232 g (2 Mol) Hexamethylendiamin (HMD) wurden in 500 ml heißem Wasser gelöst. Beim Abkühlen kristallisierte ein 1:1-Addukt HDS/HMD aus.

500 g des HDS/HMD wurden mit 250 g Wasser in einem 3 l-Laborautoklaven innerhalb auf 270 °C erhitzt. Dabei wurde der Druck ab Erreichen von 20 bar durch Entspannen von Wasserdampf konstant gehalten. Anschließend wurde noch 2 Stunden bei 270 °C und 20 bar kondensiert. Dann wurde innerhalb eines Zeitraums von einer Stunde bei konstanter Temperatur auf Atmosphärendruck entspannt. Nach dem Abkühlen des Autoklaven wurde das Produkt entnommen und gemahlen. Das so erhaltene Produkt hatte eine Glasübergangstemperatur von 55 °C (gemessen mittels DSC) und eine Viskositätszahl (VZ) von 143 ml/g (gemessen als 0,5 %ige Lösung in 96 %iger Schwefelsäure).

Herstellung der Polyamid-Mischungen

Polyamid 66 (VZ 150 ml/g, z.B. Ultramid®A3 der BASF AG) bzw. Polyamid 6 (VZ 145 ml/g, z.B. Ultramid® B3 der BASF AG) und HDS/HMD-Polyamid wurden in den in der Tabelle angegeben Mengenverhältnissen gemischt und mit einem HAAKE Zweiwellen-Laborextruder (20 mm Schneckendurchmesser) bei 280 °C und 0,4 kg/h Durchsatz konfektioniert. Bei zwei Versuchen wurden 25 % Glasfasern (Schnittfasern mit 10 µm Durchmesser und 3 mm Länge, Aminosilan-Schlichte) einkonfektioniert.

Die so erhaltenen Produkte wurden getrocknet und zu Normkleinstäben verpresst.

Bestrahlung der Formkörper

Die Probekörper (10x10x3 mm) wurden einseitig mit einer Strahlendosis von 100 kGray, erzeugt mit einem Van der Graaf-Generator mit einer Beschleunigungsspannung von 3 MV, bestrahlt. Die Probekörper wurden jeweils dreimal je 10 s lang bestrahlt, wobei zwischen den Bestrahlungsdurchgängen jeweils 5 min lagen. Die Bestrahlung wurde bei Raumtemperatur durchgeführt. Während der Bestrahlung erwärmten sich die Probekörper auf etwa 60 °C.

Prüfungen

Die Viskositätszahl (VZ) unbestrahlter Proben wurde an 0,5 %igen Lösungen in 96%iger Schwefelsäure nach ISO 307 bestimmt.

Ein Maß für den Vernetzungsgrad, der durch das Bestrahlen erreicht wurde, ist der unlösliche Anteil, der nach der Extraktion der löslichen Anteile aus der bestrahlten Probe, zurückbleibt. Dazu wurden zunächst Spanproben (Dicke nicht mehr als 0,02 mm, Gewicht etwa 0,2 g) oder Schnittproben mit möglichst großer Oberfläche (Gewicht etwa 1,0 g) hergestellt und mit einer Genauigkeit von 1 mg gewogen. Anschließend wurden die Spanproben mit 50 ml, die Schnittproben mit 150 ml Ameisensäure 6 Stunden lang extrahiert. Danach wurde die Lösung entfernt, der unlösliche Anteil gesammelt, getrocknet und gewogen.

Die Wärmeformbeständigkeit sowohl vor als auch nach dem Bestrahlen wurde an gepreßten Probekörpern (10 x 10 x 3 mm) nach DIN 53 460 bestimmt. Dazu wurden die Probekörper in einem Ölbad, das bis max. 250 °C erwärmt werden konnte, erhitzt, mit 10 N (Vicat A) belastet und die Temperatur bei der Solleindringtiefe von 1 mm gemessen.

Bei den glasfaserverstärkten Proben war eine Vicat-Messung nicht möglich, da innerhalb des Meßbereiches in keinem Fall Erweichung eintrat. Die Normkleinstäbe wurden daher in einem Umluft-Wärmeschrank für jeweils 30 Minuten bei den in der Tabelle angegeben Temperaturen erhitzt und danach visuell beurteilt.

Die jeweiligen Zusammensetzungen und die Ergebnisse der Prüfungen sind der Tabelle zu entnehmen.

Tabelle: Zusammensetzung der Proben und Meßergebnisse

| Versuch Nr. | Zusammensetzung [Gew.-%] HDS/HMD | PA | GF | VZ* [ml/g] | unlöslicher Anteil[1)] [%] | Vicat A vor Bestrahlung | Vicat A nach Bestrahlung | Aussehen nach Wärmebehandlung bei 250°C | 275°C | 300°C | 325°C |
|---|---|---|---|---|---|---|---|---|---|---|---|
| erfindungsgemäß | | | | | | | | | | | |
| 1 | 5 | 95 PA 66 | - | 148 | 7 | 247 | > 250 | | | | |
| 2 | 10 | 90 PA 66 | - | 148 | 17 | 242 | > 250 | | | | |
| 3 | 20 | 80 PA 66 | - | 150 | 35 | 239 | > 250 | | | | |
| 4 | 20 | 80 PA 6 | - | 145 | 45 | 210 | > 250 | | | | |
| 5 | 8 | 67 PA 66 | 25 | 138 | 2) | 2) | 2) | u | u | u | u |
| zum Vergleich | | | | | | | | | | | |
| V1 | - | 100 PA 66 | - | 150 | 0 | 245 | 244 | | | | |
| V2 | - | 100 PA 6 | - | 145 | 0 | 217 | 215 | | | | |
| V3 | - | 75 PA 66 | 25 | 140 | 2) | 1) | 1) | u | k | g | g |

1) nach Bestrahlung
2) nicht meßbar
u unverändert
k Kanten angeschmolzen
g geschmolzen

* der Polyamid-Mischung, vor Bestrahlung

## Patentansprüche

1. Formmassen aus

A) 40 bis 100 Gew.-%, bezogen auf das Gesamtgewicht der Formmassen, einer Polyamidmischung aus

$a_1$) 5 bis 30 Gew.-%, bezogen auf das Gesamtgewicht der Polyamidmischung, mindestens eines, olefinische Doppelbindungen enthaltenden, Homo- oder Copolyamides auf der Basis von

$\alpha$) 40 bis 100 Mol-%, bezogen auf die Homo- oder Copolyamide, mindestens eines Monomeren, welches mindestens eine olefinische Doppelbindung enthält (Monomere $\alpha$), aus der Gruppe der

$\alpha_1$) olefinisch ungesättigten Lactame,
$\alpha_2$) olefinisch ungesättigten Aminocarbonsäuren,
$\alpha_3$) olefinisch ungesättigten Dicarbonsäuren,
$\alpha_4$) olefinisch ungesättigten Diamine und

$\beta$) 0 bis 60 Mol-%, bezogen auf die Homo- oder Copolyamide, mindestens eines Monomeren, welches keine olefinischen Doppelbindungen enthält (Monomere $\beta$), aus der Gruppe der

$\beta_1$) Lactame,
$\beta_2$) Aminocarbonsäuren,
$\beta_3$) Dicarbonsäuren,
$\beta_4$) Diamine und

$a_2$) 70 bis 95 Gew.-%, bezogen auf das Gesamtgewicht der Polyamidmischung, mindestens eines Polyamides, welches keine olefinischen Doppelbindungen enthält und

B) 0 bis 35 Gew.-%, bezogen auf das Gesamtgewicht der Formmassen, eines schlagzäh modifizierenden Kautschuks und

C) 0 bis 50 Gew.-%, bezogen auf das Gesamtgewicht der Formmassen, eines Füllstoffes und/oder Verstärkungsmittels und

D) 0 bis 20 Gew.-%, bezogen auf das Gesamtgewicht der Formmassen, eines Flammschutzmittels und

E) 0 bis 10 Gew.-%, bezogen auf das Gesamtgewicht der Formmassen, weitere Zusatzstoffe und Verarbeitungshilfsmittel.

**2.** Formmassen nach Anspruch 1, in denen die Monomere ($\alpha$) aus der Gruppe 3-Hexen-1,6-dicarbonsäure, 4-Octen-1,8-dicarbonsäure, 10-Eicosen-1,20-dicarbonsäure, 3-Hexen-1,6-diamin und 2,7-Diamino-2,7-dimethyl-4-octen ausgewählt sind.

**3.** Formmassen nach Anspruch 1 oder 2, in denen die Monomere ($\beta$) aus der Gruppe Adipinsäure, Hexamethylendiamin und $\epsilon$-Caprolactam ausgewählt sind.

**4.** Formmassen nach den Ansprüchen 1 bis 3, in denen das Polyamid, welches keine olefinischen Doppelbindungen enthält, ausgewählt ist aus der Gruppe

$a_{2.1}$) Poly-$\epsilon$-caprolactam
$a_{2.2}$) Polyhexamethylenadipinsäureamid
$a_{2.3}$) teilaromatische Copolyamide, die im wesentlichen aufgebaut sind aus Einheiten, die sich von Terephthalsäure und Hexamethylendiamin ableiten und Einheiten, die sich von $\epsilon$-Caprolactam ableiten.

**5.** Verwendung der Formmassen gemäß den Ansprüchen 1 bis 4 zur Herstellung von Formkörpern oder flächigen Gebilden.

**6.** Formkörper oder flächige Gebilde erhältlich aus den Formmassen gemäß den Ansprüchen 1 bis 4.

**7.** Verfahren zur Herstellung von teilvernetzten Formkörpern oder flächigen Gebilden, dadurch gekennzeichnet, daß man Formmassen nach den Ansprüchen 1 bis 4 nach der Formgebung energiereicher Strahlung aussetzt.

**8.** Verfahren zur Herstellung von Formkörpern gemäß Anspruch 7, dadurch gekennzeichnet, daß man als energiereiche Strahlung Beta-, Gamma-, Röntgen- oder Elektronenstrahlung verwendet.

Europäisches Patentamt

# EUROPÄISCHER RECHERCHENBERICHT

Nummer der Anmeldung

EP 93 10 2917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 466 477 (SNIA VISCOSA) --- | | C 08 L 77/00<br>C 08 L 77/06<br>C 08 G 69/02<br>C 08 G 69/26<br>G 03 F 7/038 |
| A | FR-A-2 628 112 (CENTRAL GLASS)<br>& DE-A-3 906 684 (CENTRAL GLASS) (Kat. D) --- | | |
| D,A | POLYMER, Band 17, Nr. 3, März 1976, Seiten 185-191; G. MAGLIO et al.: "Influence of intra-chain trans double bonds on the melt crystallization of polyamides" ----- | | |
| | | | **RECHERCHIERTE SACHGEBIETE (Int. Cl.5)** |
| | | | C 08 L<br>C 08 G<br>G 03 F |

Der vorliegende Recherchenbericht wurde für alle Patentansprüche erstellt

| Recherchenort | Abschlußdatum der Recherche | Prüfer |
|---|---|---|
| DEN HAAG | 06-07-1993 | LEROY A J |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)